# EUROPEAN PATENT SPECIFICATION

(11) **EP 1 591 516 B1**
(45) Date of publication and mention of the grant of the patent: **15.07.2009**
(21) Application number: 02783826.7
(22) Date of filing: 03.10.2002
(51) Int. Cl.: C12C 11/00

(54) **HEAT EXCHANGER FOR FERMENTATION TANK**
WÄRMETAUSCHER FÜR GÄRTANK
ECHANGEUR DE CHALEUR POUR RESERVOIR DE FERMENTATION

(43) Date of publication of application: 02.11.2005
(73) Proprietor: Morales Cervantes, José, Toluca 52200 (MX); Soto Porrua, Angel José Enrique, Toluca 52200 (MX)
(72) Inventor: Morales Cervantes, José, Toluca 52200 (MX); Soto Porrua, Angel José Enrique, Toluca 52200 (MX)
(74) Representative: Heusler, Wolfgang
(86) International application number: PCT/MX2002/000096
(87) International publication number: WO 2004/031340

(56) References cited:
- DE-U- 20 107 924
- GB-A- 1 046 291
- US-A- 2 034 468
- US-A- 3 713 839
- US-A- 3 910 172
- US-A- 4 206 237

## Description

An accessory for cooling fermentation tanks is presented, which can be primarily used in beer production, cooling and maturing, however, it can also be used in wine production and fermentation, in fermentable alcoholic beverages or milk production and dairy products.

Upgraded fermentation equipment is composed by a combination of a heat exchanger internally located, vertically positioned, inside a tank, which includes some double-wall concentric cylinders, whose length and capacity may feature different dimensions, depending on tank size and geometry, and through said heat exchanger a coolant will pass to cool liquid to adequate temperature for processes, coolant is supplied and recovered by distributors which may be set in upper or lower position.

Heat transmission occurs when heat exchangers are immersed within the wort and beer liquid and placed at center of fermentation tanks.

It also includes tubular supports, feasible to be used as passages for coolant supply and extraction, cleaning solutions and signals of control.

The heat exchanger of proposed invention is versatile as to be used both in new fermentation equipment and to be adapted to existent fermentation equipment remarkably improving cooling efficiency.

Therefore, this invention's field of action may also include cooling accessories for beer maturing, and by extension to wine, whiskey, tequila, rum, vodka fermentation, generally for any kind of distilled beverages produced during wort fermentation by yeast or any microorganism, and may also be used as milk products cooler and fermenter.

US-A-4,206,237 discloses a fermentation tank including upper and lower external jackets. In addition a cooling jacket is provided underneath the bottom wall. The object of the tank is to subject beer in the lower portion of the tank to a more intensive cooling.

DE-201,07,924U discloses a fermentation tank for beer including an inner cooling jacket and a pump in order to provide a mechanical movement in the wort of the beer.

US-A-3,910,172 discloses a fermentation tank including external jackets and cooling jackets for a conical bottom. The object of the tank is to provide a plurality of vertically disposed stages of annular structures externally disposed around the tank and the conical bottom. Such annular structures are formed of jacket portions called "cooling pockets" connected in series. Cooling/heating fluid is supplied independently to each annular structure. The apparatus also includes a plurality of pipes called "glove fingers" to have samples of the temperature inside the tank. Such cooling pockets and glove fingers provide a better temperature control inside the tank.

GB-A-1,046,291 discloses an apparatus for decanting yeast from fermented wort derived from a continuous fermentation process. The apparatus comprises baffle means defining a spiral path for the settlement of the liquid yeast mixture and cooling means.

### INVENTION OBJECTIVES

To the best knowledge of this invention's authors, objectives can be summarized as follows.

It is a purpose of this invention to have an internal vertical cooling equipment for fermentation tanks, which can use any kind of coolant inside beer fermentation, cooling and maturing tanks. System optimizes temperature control and distribution inside the tank during fermentation, resulting in a better quality beer, in addition to significantly shortening cooling time as compared to conventional systems.

This invention has also the purpose of being versatile equipment such as to be compatible with traditional equipment featuring external cooling jackets, so it may be used jointly with said equipment as an upgraded feature, or may be used in new fermentation tanks.

Another objective of this invention is to have a vertical heat exchanger, immersed in wort or beer inside fermentation tanks, consisting of double-metallic-wall pipes or cylinders, through which coolant will pass without getting mixed with beer wort. The heat exchanger, as it is located inside fermentation device, achieves temperature homogenization, thus optimizing cooling and fermentation process, preventing high liquid temperature differences which result from exothermal fermentation in the various liquid areas, consequently achieving a better quality beer as a controlled fermentation is attained, and at the same time, minimizing undesired heavy, volatile alcohols and sub-products formation.

This invention has also the purpose of counting on a heat exchanger which can be manufactured in any size and proper capacity according to cooling requirements, i.e., volume to be fermented and cooled. The Heat exchanger arrangement inside the tank can be anyone and it can be manually or automatically operated or a combination of both. Dimensions or diameter of fermentation tank to be cooled does not involve limitations. In addition to, an extensive heat exchanger has been developed, as to be able to use concentric systems combinations having several geometry, unlike having fermentation tank external jackets as the sole cooling element as occurs in conventional fermentation tanks.

As another characteristic of this invention, it has been foreseen to remove cooling jacket installed in conic bottom of conventional fermentation tanks, due to feasibility of locating vertical heat exchanger internally, locating it close to the bottom to cause thermal movement needed to cool that portion of the fermenter, thus achieving the same temperature and fermentation control for the whole tank, and optimizing fermentation process in this way, since in such case double fermentation is avoided.

As another goal of this invention, heat exchanger geometry versatility has been foreseen by way of simple straight or concentric pipes for coolant passing and its use will depend on application and size of fermentation device. In this case, both coolant supply and extraction of heat exchanger is done from outside the fermentation tank through pipes connected to heat transference units, coolant does not have direct contact with beer wort.

Another purpose of this invention is to include high pressure and high flow turbine cleaners and spray ball installation, duly oriented for fast cleaning of fermentation tank and vertical cylindrical heat exchanger, making equipment cleaning easy before starting another production batch.

This invention is also aimed to reduce coolant travel distance inside vertical heat exchanger, therefore temperature difference between coolant and liquid to be cooled is kept high, allowing for better cooling efficiency, unlike external jackets located in conventional tanks, where travel coolant distances are higher, thus having a lower temperature difference average.

In the case of this proposed invention, by using vertical heat exchanger, coolant circulation speed is increased due to straight geometry of cylinders, through which cooling process is optimized. Likewise, vertical heat exchanger installation in the center of tank decreases different temperature layers formation as compared to conventional systems, and at the same time thermal downstream and upstream natural speed is increased, resulting in minimum temperature differences (more controlled fermentation) and consequently resulting in better products

Another objective of this invention is to cause wort strong movement during fermentation, which induces better contact between yeast cells and wort, thus improving fermentation process. While having a more uniform temperature in wort layers during fermentation, undesired heavy, volatile alcohol and sub-products formation control is improved.

Another purpose of this invention is to allow for better energy exploitation and less consume since all of its surface is in contact with liquid to be cooled, unlike traditional systems in which jackets outer wall is oriented towards external environment causing environment heat losses, even if isolation is used.

This invention is also aimed to ease temperature homogeneity and liquid movement during cooling, assisting transmission coefficient improvement and, at the same time, avoiding the need to use carbon dioxide bubbling systems used in traditional systems.

### BRIEF SUMMARY OF THE INVENTION

In wort fermentation tanks for production of all kinds of beer, as well as universal tanks known in the industry as unitanks, of traditional design, temperature control during fermentation, cooling and maturation is carried out through cooling jackets outside the tanks, located on their walls, where only inner side of jacket is used for wort and beer cooling.

Several jacket designs are used, in arrangements where they are installed in the vertical walls of fermentation tanks and cones, jackets can be installed in vertical or horizontal position, in one or several cooling sections but all of them are installed by welding them to external wall of fermentation tank body.

In traditional design fermentation tanks, as capacity is increased, so increases their diameter, therefore when jackets are installed outside, cooling zone distance to center of the fermenter is increased reaching distances higher than five meters, causing temperature control not being uniform and inadequate liquid movement, thus promoting layers formation and temperature differences which sometimes are higher than 3°C, preventing a controlled fermentation, causing undesired sub-products formation. This is quality detrimental for beer produced. The aforementioned situation becomes more evident as fermentation tanks capacity is increased. This forces some beer producers to limit fermentation tanks size in order to decrease such effect, which involves increasing investment costs, as more fermentation tanks have to be acquired and consequently increasing beer production costs.

Likewise, using external cooling jackets limits tank geometry design, since in order to account for a higher heat transmission area from external cooling jackets and higher cooling speed, a straight section height /tank diameter high ratio, higher than 2:1 is required, which is against technological requirements for quality beer production.

In conventional systems, it is required to locate cooling jackets in tanks conic bottom in order to control fermentation and cooling in this area, having an independent temperature control. These jackets do not always operate similarly to upper jackets, resulting in two types of fermentation, which is detrimental for quality of beer.

On the other hand, beer cooling speed at process final stage is limited by available jacket areas, therefore having longer fermentation tanks occupation time, thus requiring a larger number of them in order to achieve desired breweries production capacity.

Heat transmission coefficients in conventional design featuring external cooling jackets are-generally low, this factor, as well as the fact of using only one side of jacket for cooling, involves limitation of its efficiency. It is common to use carbon dioxide injection at final cooling stages, in order to accelerate beer movement and thus increase heat transmission coefficient for a faster cooling. Additionally, at outer jacket side, even when it is isolated, there is an energy loss by heat transmission due to the high temperature difference between external environment and coolant temperature.

Summarizing, traditional systems tend to difficult beer quality control and to induce long cooling periods, which increase production costs.

This invention, consisting of a heat exchanger located internally, vertically positioned, corrects and upgrades traditional systems performance.

### DRAWINGS BRIEF DESCRIPTION

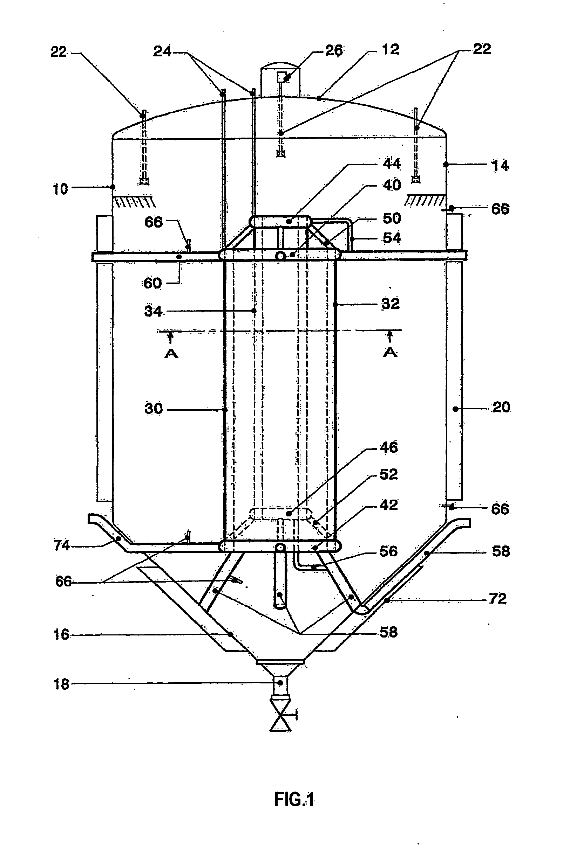

Figure 1 shows a vertical view of a fermentation tank and that of a vertically positioned heat exchanger located internally;
Figure 2 is a vertical view of a fermentation tank and that of a vertically positioned heat exchanger located internally showing thermal streams movement or flow;

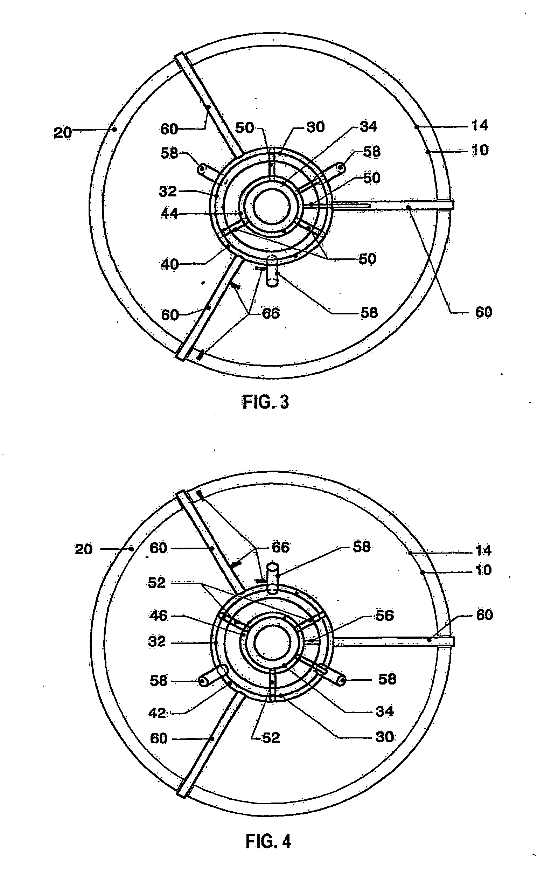

Figure 3, is a topside view of a fermentation tank where heat exchanger tightened is shown;
Figure 4 is a lower side view of a fermentation tank where heat exchanger tightened is shown;

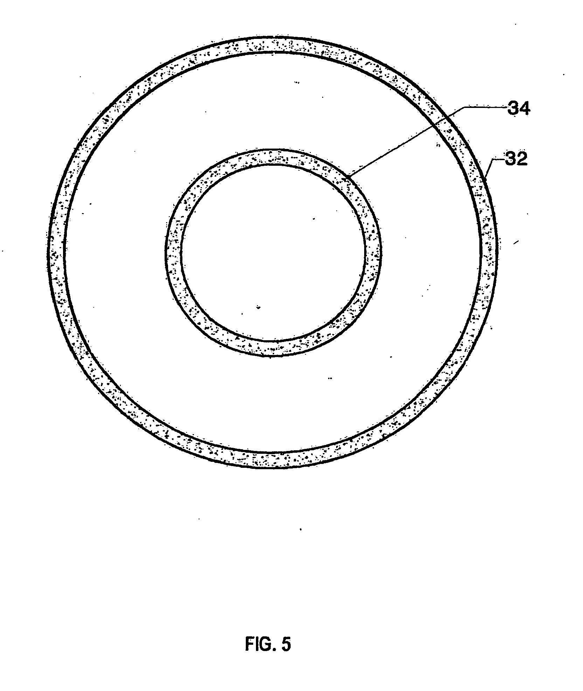

Figure 5 shows a side view of two double-wall cylinders by which coolant flows;

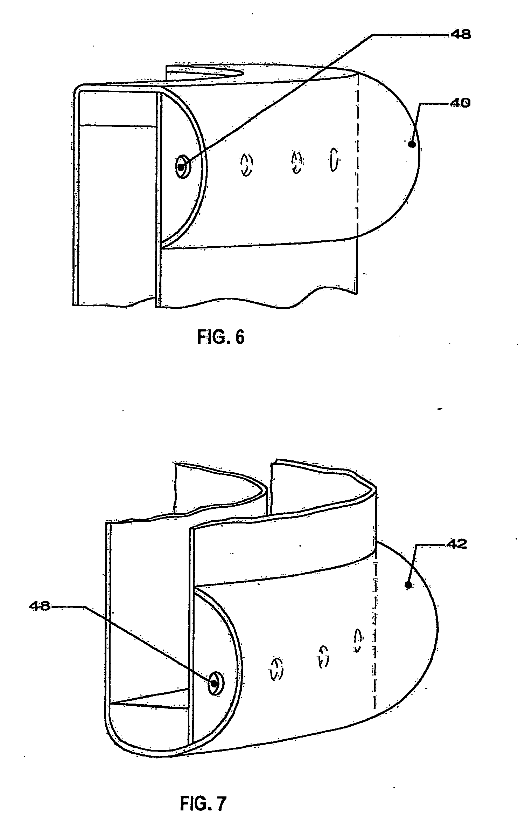

Figure 6 is a perspective showing detail of upper collector and concentric pipes;
Figure 7 is a perspective showing detail of lower collector and concentric pipes;
Figures 8 to 19 show a side view of several possible arrangements or modalities of heat exchanger, which a cooling tank may have;
Figures 20 to 26 show a vertical view of several arrangements for heat exchanger double-wall cylinders, both internal and external, which may be used.

### DETAILED DESCRIPTION OF THE INVENTION

As referring to said figures and following same nomenclature of reference signs shown, this invention consists of an internal vertical heat exchanger **30**, to be installed inside a tank **10**, three main sections are underlined from the latter: an upper, dome cap **12**, whose function will be to maintain sufficient space as to store gases formed during fermentation process; a cylindrical body **14**, whose function will be to contain beer wort to carry out fermentation process, whose exothermal reaction requires cooling and also to cool the beer after fermentation, to do so a cooling jacket **20** may be fitted on external wall, the whole fermentation tank is usually isolated in order to decrease heat losses toward environment and, the conic-shaped bottom **16,** with variable design angle, whose function will be to receive and store deposited particles, which are finally extracted by a lower valve **18,** same as wort and beer after separating deposits.

Inside fermentation tank **10,** a heat exchanger **30** is located, centered and vertically positioned, whose function will be to cool wort and beer and to maintain them within the desired temperature range during the various process stages.

This heat exchanger **30**, comprises a set of two straight concentric cylinders forming a double-wall by which a coolant will pass, to maintain beer wort and beer within desired temperature ranges; which form the external cylinder **32,** they are attached at each end to some doughnut-shaped coolant distributors, which we call, upper external collector **40** and lower external collector **42,** through which coolant will be supplied, distributed and evacuated.

Similarly, there is another set of two double-wall, concentric straight cylinders, vertically positioned and concentric to external cylinder **32** forming internal cylinder **34,** they are attached at each end to some coolant distributors, also doughnut-shaped, which are called upper internal collector **44** and lower internal collector 46, and through which a coolant will also pass. These external collectors **40** and **42** as well as internal collectors **44** and **46,** have the function of better distributing coolant and at the same time, serving as compensation chamber for coolant supply and extraction.

Both external and internal collectors are arranged in combination with concentric cylinders forming a double wall closed at the ends, carrying multiple holes **48,** for coolant distribution and extraction, located in periphery of said ends and confined by a hemispherical, doughnut-shaped cover **68** and **70.**

Double-wall external cylinder **32** of heat exchanger **30** is connected at its lower end to lower external collector **42,** and has piping installed on it **58,** whose function will be both to support heat exchangers weight **32** and **34,** and to serve as passage for coolant and temperature sensors signal, and they are attached at their lower ends to conic section **16** side walls. On the other hand, piping **50** and **52,** have the function of supporting heat exchanger weight **34** and additionally to serve as coolant conduction of exchanger **32** to **34.** Coolant conduction of exchanger **32** to **34** can also be carried out through passage **56** at the lower side, and evacuation at the upper side of passage **50.** In addition, at the upper external collector section **40,** there is support piping **60,** also equidistantly distributed, which is attached at its ends to body wall **14,** which in addition to maintaining heat exchanger **30** positioned, will serve for coolant exhaustion, and temperature sensors signals conduction. At least three lower support piping **52** and **58,** as well as upper ones **50** and **60** can be found in each section, equidistantly distributed.

Through one or various **58** piping, or through piping **74,** coolant will pass to lower external collector **42,** to go through jacket **32** and from there to upper external collector **40,** from there it will be transferred through passages **60** to outside fermentation tank. Similarly, through passages **56** and **52,** coolant will pass to lower internal collector **46,** to go through jacket **34** and from there to upper internal collector **44,** from there through any of the passages **60,** to evacuate coolant outside fermentation tank for collection.

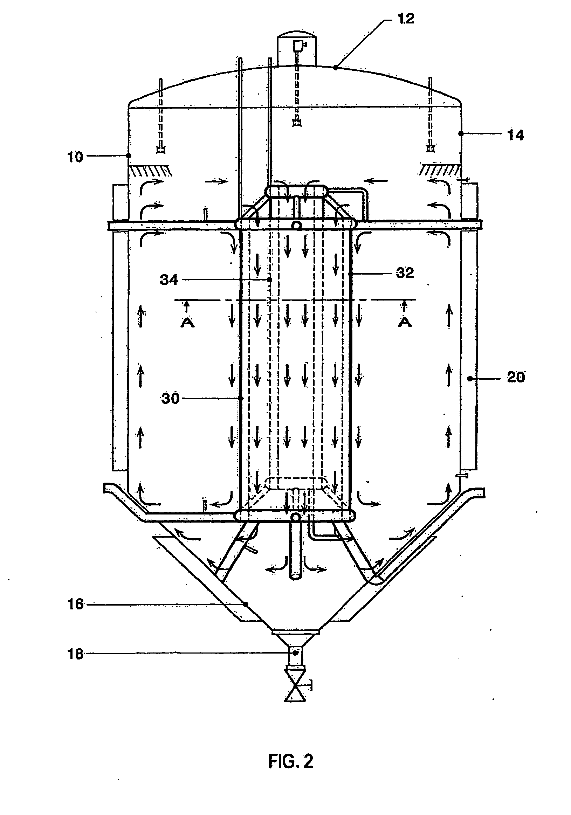

Through proposed heat exchanger **30,** at conic section **16,** a stronger wort internal stream is produced, coming from concentric space formed by sets of jackets **32** and **34,** causing turbulence at the bottom (see Figure 2), making installation of an external jacket **72** on external conic wall **16** unnecessary unlike conventional systems, since cylinders distance to the bottom can be additionally adjusted. Such movement is desired in order for most of wort to be in contact with yeast and for biological reaction to be carried out more easily to obtain beer. The above mentioned effect also applies at cooling stage, avoiding the need for carbon dioxide bubbling in traditional system, which is used to increase transmission coefficient.

Oil purging, in case of using ammonia as coolant, is external to the tank, and any of support piping **58** is used for drainage. Equipment has also been fitted with air purge lines **24,** whose function will be to expel air accumulated inside heat exchanger 30collectors, in case of using glycol as coolant.

Cleaning requirements are very important to prevent undesired biological infections, this is achieved first: by manufacturing exchange systems attaining a high polish degree at exchanger surface and its parts, in order for yeast, waste, foam, beer detachment to be fast when using detergent solutions. Heat exchanger **30** mechanic design is such that during cleaning, its whole surface is in contact with cleaning liquids. A distribution system for cleaning solutions consists of a high pressure and high flow cleaning central turbine **22,** and at least four auxiliaries, one of them at the lower side of exchanger **30;** which cleans fermentation tank **10** internal walls, as well as heat exchanger 30surfaces, achieving an efficient cleaning on the basis of flow, collision strength on walls, cleaning concentrations and cycles, as well as flow pattern, in addition to being a dismountable system for inspection and maintenance purposes, as well as integrating sensors detecting flow movements in turbines to ensure cleaning, said turbines **22** have been selected for self-cleaning between each other to ensure a wide spectrum cleaning.

On the other hand, temperature sensors **66** can be installed inside fermentation tank in any position in supply or evacuation pipes **58, 74** and **66,** conducting signals in the inside, this allows a better temperature control, than installing them only on fermentation tank walls as in traditional systems.

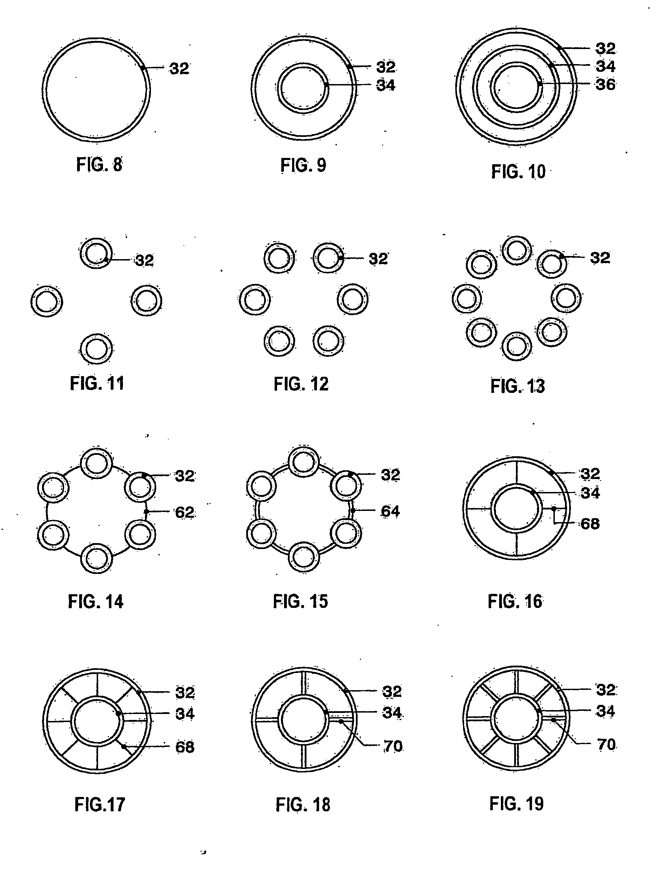

As a modality of this invention, heat exchanger **30,** may consist of a higher multiple of jackets as it is shown in figure 8, or of a jacket cluster as shown in figures 9 and 10, being possible to attach these jackets as they are shown in figure 14.

The usage of distribution fins **60,** has also been foreseen, they consist of deflector plates to ensure a closer contact and heat exchange as it is shown in figures 16 and 17, or radial intermediate jackets **68** between jackets of pipes **32** and **34**

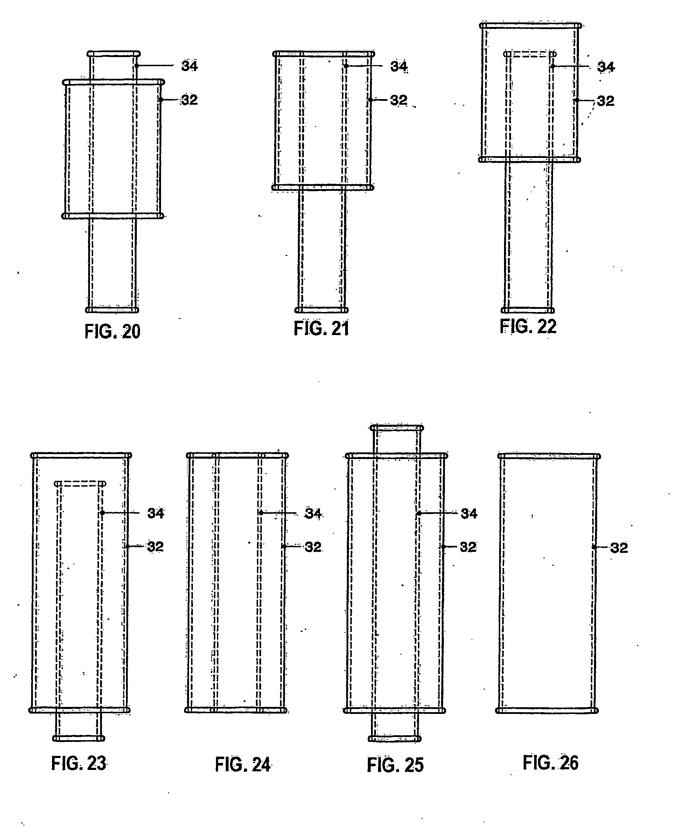

Finally, depending on fermentation type desired to perform, heat exchanger **30,** may have different dimensions for external jackets **32** and internal jackets **34** length as it is shown in figures 20 a 26.

That means this invention is versatile enough as to be adapted to any liquid fermentation process, and to several fermentation tanks capacity and geometry, even for upgrading existent conventional fermentation tanks, regardless they may have external jackets already installed.

### BEST WAY TO CARRY OUT INVENTION

Coolant fluid can be of any type, that means, it can be a liquid with a high evaporation index, or else, a liquid not experiencing an important physical state change or liquid with solids with or without state change.

Coolant supply can be carried out indistinctly at the upper side **60,** or at the lower side **58** and **56** of heat exchanger **30**.

For example, for the case of ammonia, or any liquid-gas coolant, supply may be carried out at the lower side or at the upper side, while if they are liquid systems such as glycols, supply must be carried out through lower side.

Whatever supply is used, exhaustion will always be the opposite, that is, if the first is done through the upper side, the latter should be done through the lower side and vice versa. This will depend on the type of coolant used, however, regardless which coolant is used, system is not altered. Decision as to which one to use is the user's choice.

When fermentation tank **10** is filled with wort to be fermented, coolant enters heat exchanger **30** for example, by the lower side through support pipes **58,** or through side connections **74,** supply may be done through one or all pipes, depending on fermentation tank size and process used, flow being controlled by valves externally located at coolant supply inlet. Information signals for temperature controls are made through sensors **66,** which in the case of this invention, can be installed inside the tank in order to achieve more accurate fermentation readings and controls, unlike conventional systems, in which sensors are installed at fermentation tank wall.

Once coolant enters to distributors **42** and **46,** each one will supply concentric jackets **32** and **34** and flooding will start, and as coolant evaporation is reached, this is, when energy in the form of heat from wort or beer is received, vapor will be received by upper collectors **40** and **44,** which feature an internal design included as part of document herein to allow for an adequate collection of coolant used which will conduct it to tank exhaustion piping through pipes **60** also used as heat exchanger **30** support to maintain it positioned inside the tank. Liquid-gas type coolant, for example ammonia, can also be supplied through upper side, flow is inverted, and the only change is type of distributors to be used.

In case of using a liquid coolant, for example glycol, supply is made through lower side **42** and **46** and exhaustion through upper side by upper external collectors **40** and **44,** accounting for a special design for this type of coolant, in this case, a venting and air purging system **24** is installed in upper collectors **40** and **44,** necessary for proper operation.

On the wort and beer side, downstream and upstream as well as circular stream will occur, as shown in figure 2, due to wort or beer density and viscosity changes. These changes in liquid circulation are different to those produced when it is cooled only by tank walls. In the new system, higher turbulence is experienced due to internal vertical heat exchanger **30** distribution inside fermentation tank **10,** allowing for a larger portion of wort or beer to be in contact with cooling surface inducing in this way a larger fermentation temperature homogenization, therefore producing less beer fermented at different temperatures and consequently a better quality control.

Exhaustion of coolant used by heat exchanger **30** is made through upper collectors **40** and **44** and from them out of fermentation tank **10** by one or more pipes **60** and **54** depending on volume to be extracted and if upper or lower supply is involved.

For the case involving usage of glycol or dynamic ice as coolant, control system is also similar to conventional ones, using fast close on-off valves for supply control and coolant exhaustion as well as calibrated safety valves and internal venting for purging **24** which are directed and operated from the dome **12,** and where installed are control and vacuum valves **26**.

## Claims

1. A vertical heat exchanger for a fermentation tank, comprising:
a set of at least two concentrically disposed double-wall cylinders, consisting of an inner cylinder (34) and an outer cylinder (32) in fluid communication, such cylinders having opposite ends;
doughnut-shaped collectors (40-46) attached to the ends of the cylinders (32, 34); and
at least an inlet and an outlet for supplying and removing a heat transfer liquid from the heat exchanger.

2. The heat exchanger for a fermentation tank according to claim 1, **characterized in that** the inner cylinder (34) is axially displaced with respect to the outer cylinder (32).

3. The heat exchanger for a fermentation tank according to claim 1, **characterized in that** said doughnut-shaped collectors (40-46) comprises a plurality of holes (48) located in the periphery of each end of each cylinder and confined through a hemispherical doughnut-shaped cover (49) of the doughnut-shaped collectors (40-46).

4. A fermentation tank comprising a heat exchanger (30) according to any one of claims 1-3, internally located and vertically arranged inside the tank, and further comprising an upper dome cap (12), a cylindrical body (14), and a conic-shaped bottom section (16).

5. The fermentation tank according to claim 4, **characterized in that** the heat exchanger (30) further comprises radial fins (60, 68, 70) or intermediate radial double-wall conducts arranged between the concentrically disposed cylinders (32, 4).

6. The fermentation tank according to claim 4, **characterized in that** it further comprises an external cooling jacket (20, 72) around the cylindrical body (14) and/or the conic-shaped bottom section (16).

7. The fermentation tank according to claim 4, **characterized in that** it further comprises a cleaning system, consisting of a plurality of high pressure and high flow turbines (22), located inside the upper dome cap (12).

8. A method for the manufacture of a tank (10) for carrying out fermentations comprising the steps of: providing an existing tank; and arranging at least one vertical heat exchanger according to claim 1 inside said tank.

## Patentansprüche

1. Vertikaler Wärmetauscher für einen Gärtank mit:
einer Anordnung aus mindestens zwei konzentrisch angeordneten doppelwandigen Zylindern, die aus einem inneren Zylinder (34) und einem äußeren Zylinder (32) besteht, welche in Fluidverbindung stehen und entgegengesetzte Enden haben;
an den Enden der Zylinder (32, 34) befestigten ringröhrenförmigen Kollektoren (30-46); und
mindestens einem Einlass und einem Auslass zum Zuführen und Entfernen einer Wärmeübertragungsflüssigkeit von dem Wärmetauscher.

2. Wärmetauscher für einen Gärtank nach Anspruch 1, **dadurch gekennzeichnet, dass** der innere Zylinder (34) in Bezug auf den äußeren Zylinder (32) axial versetzt ist.

3. Wärmetauscher für einen Gärtank nach Anspruch 1, **dadurch gekennzeichnet, dass** die ringröhrenförmigen Kollektoren (40-46) eine Mehrzahl von Löchern (48) haben, die sich im Umfang jedes Endes jedes Zylinders befinden und von einer halbrunden ringröhrenförmigen Abdeckung der ringröhrenförmigen Kollektoren (40-46) eingeschlossen sind.

4. Gärtank, der einen innerhalb des Tanks vertikal angeordneten Wärmetauscher (30) nach einem der Ansprüche 1 bis 3 und ferner eine obere Kuppelhaube (12), einen zylindrischen Körper (14) und einen konisch geformten Bodenteil (16) aufweist.

5. Gärtank nach Anspruch 4, **dadurch gekennzeichnet, dass** der Wärmetauscher (30) ferner radiale Rippen (60, 68, 70) oder radiale doppelwandige Zwischenführungen aufweist, die zwischen den konzentrisch angeordneten Zylindern (32, 34) angeordnet sind.

6. Gärtank nach Anspruch 4, **dadurch gekennzeichnet, dass** er ferner einen äußeren Kühlmantel (20, 72) um den zylindrischen Körper (14) und/oder den konisch geformten Bodenteil (16) aufweist.

7. Gärtank nach Anspruch 4, **dadurch gekennzeichnet, dass** er ferner ein Reinigungssystem aufweist, das aus mehreren Hochdruck- und Starkfluss-Turbinen (22) besteht, die sich innerhalb der oberen Kuppelhaube (12) befinden.

8. Verfahren zur Herstellung eines Tanks (10) für die Durchführung von Gärungen mit den Schritten: Bereitstellung eines vorhandenen Tanks; und Anordnung mindestens eines vertikalen Wärmetauschers nach Anspruch 1 im Inneren des Tanks.

## Revendications

1. Échangeur de chaleur à arrangement verticale pour cuve de fermentation comprenant:
une groupe d'au moins deux cylindres à arrangement concentrique et à double paroi qui consistent en un cylindre intérieur (34) et un cylindre extérieur (32) en communication fluidique, lesdits cylindres ayant des extrémités opposés;
des collecteurs en forme de tube annulaire (40 - 46) qui sont attachés aux extrémités des cylindres (32, 34); et
au moins une entrée et une sortie pour amener à, et emmener de l'échangeur de chaleur un liquide caloporteur.

2. Échangeur de chaleur pour cuve de fermentation suivant la revendication 1, **caractérisé en ce que** le cylindre intérieur (34) est axialement décalé par rapport au cylindre extérieur (32).

3. Échangeur de chaleur pour cuve de fermentation suivant la revendication 1, **caractérisé en ce que** les collecteurs en forme de tube annulaire (40 - 46) comprennent une pluralité de trous (48) étant situés au circonférence de chaque extrémité de chaque cylindre et étant délimités par une couverture en forme de tube annulaire hémisphérique (49) appartenant aux collecteurs en forme de tube annulaire (40 - 46).

4. Cuve de fermentation comprenant un échangeur de chaleur (30) suivant l'une des revendication 1 à 3, qui est disposé à l'intérieur et arrangé verticalement à l'intérieur de la cuve, et en outre comprenant un couvercle supérieur en forme de dôme (12), un corps cylindrique (14) et une partie inférieure conique (16).

5. Cuve de fermentation suivant la revendication 4, **caractérisé en ce que** l'échangeur de chaleur (30) en outre comprend des nervures radiales (60, 68, 70) ou des conduites radiales intermédiaires à double paroi qui sont arrangées entre les cylindres concentriques (32, 34).

6. Cuve de fermentation suivant la revendication 4, **caractérisé en ce qu'**elle comprend en outre une gaine extérieure réfrigérante (20, 72) autour du corps cylindrique (14) et/ou la partie inférieure conique (16).

7. Cuve de fermentation suivant la revendication 4, **caractérisé en ce qu'**elle comprend en outre un système de nettoyage consistant en une pluralité des turbines à pression élevé et à écoulement élevé (22) qui sont situées à l'intérieur du couvercle supérieur en forme de dôme (12).

8. Procédé pour produire une cuve (10) destinée à effectuer des fermentations, comprenant les étapes de: procurer une cuve existante; et arranger à l'intérieur de ladite cuve au moins un échangeur de chaleur à arrangement vertical suivant la revendication 1.
